# EUROPEAN PATENT APPLICATION

(11) **EP 1 998 509 A1**
(43) Date of publication of application: **03.12.2008**
(21) Application number: 07380154.0
(22) Date of filing: 29.05.2007
(51) Int. Cl.: H04L 12/56

(54) **Transparent backup IP router in a local area network**

(71) Applicant: Teldat S.A., 28760 Tres Cantos Madrid (ES)
(72) Inventor: Garcia Amorena Ventura, Eduardo, 28760 Tres Cantos Madrid (ES)
(74) Representative: ABG Patentes, S.L.

(57) **Abstract**

A device (3) is designed to be transparently inserted in a local area network (4) which consists of at least one IP router (2) and at least one local equipment (1), and comprises means of connection (3a) between said device (3) and each one of said local equipments (1) and means of connection (3b) between said device (3) and each one of said IP routers (2). Likewise, the device comprises means of switching capable of establishing a connection between said local equipments (1) and said IP routers (2) in two different modes, namely: a first bridged mode wherein said local equipments (1) and said IP routers (2) are directly connected, and a second processed mode wherein said device (3) acts as back-up router, spoofing said IP routers (2).

## Description

### TECHNICAL FIELD

The present invention relates to the technical field of network systems. In particular, in the field of internetworking, and, more in particular, in the areas of networks and IP routing, of tolerance to failures and distribution of the traffic load between equipments.

### BACKGROUND AND STATE OF THE ART

A network is a communication system which allows a computer user to access resources and Exchange messages with users of other computers. A network is typically a data communication system which links two or more equipments, for example computers and/or peripheral devices. It lets users share resources from their own systems with other network users and to access information from central systems or systems located in remote offices. Connections to Internet or networks of other organizations can be provided.

A network typically includes a cable which is connected to a Network Interface Card in each one of the network equipments or devices. Currently wireless network connections are proliferating, thus eliminating the need for said cable.

The users interact with network applications to make a network request, such as for example receiving a file or printing in a network printer. An application can also communicate with network software, and the network software can interact in turn with the network hardware to transmit information to other devices connected to the network.

A local area network (LAN) is a network located in a relatively small area, such as an office or a building. A LAN typically includes a shared media whereto terminals are connected and whereby they intercommunicate using broadcasting mechanisms. By broadcasting, any device of a LAN can transmit messages that all the other LAN devices will receive. The device to which the message is addressed is the one that processes it. The information is typically encapsulated in frames to be transmitted through the LAN.

In a LAN all connected devices are identified by a MAC address. Each message broadcast in the LAN and addressed to a device is encapsulated in a frame associating the MAC address of said device. All LAN devices receive the frame, but it is only processed by the one whose MAC address coincides with that of the frame. This and the other mechanisms which allow the transmission of information between devices connected to the same LAN are included within level 2 and below of the OSI (Open Systems Interconnection) model. Therefore, the MAC addresses of the devices are also called level 2 addresses.

There are various mechanisms to interconnect two LANs. A HUB can be inserted between them to join them by broadcasting of all the frames from one LAN to the other LAN and vice versa. Another possibility is to insert a switch between the LANs to broadcast only the frames that are addressed to the other LAN, thus economizing bandwidth. This possibility is also called transparent bridge. A third possibility is to insert a router between the two LANs to make the interconnection at a higher level.

When there is a swarm of LAN networks the interconnection of all of them by hubs or switches may be complicated and inefficient. To work with many LAN networks there are upper level addressing and routing systems, such as IP protocol, which is a level 3 protocol in the OSI model. When working with IP protocol each device has a unique IP address assigned and all devices of a same LAN have IP addresses in a range only assigned to said LAN. The interconnection of two LANs at IP level is made by a router, which is a device with two or more network connections, each one of them with its own MAC address. Each router has the information necessary to direct the traffic to any IP address of the LAN, either by configuration or learned by routing protocols established between the different routers which interconnect the LAN.

When a device transmits information to another determined device by its IP address, the information is first encapsulated in an IP packet where, among other details, the destination IP address is specified. This IP packet is encapsulated in a frame to transmit it to another device in the LAN, which may be the recipient of the information or a router which gives access to another LAN. Thus, information transmitted to a equipment of the same LAN is encapsulated in an IP packet which, in turn, is encapsulated in a frame directly addressed to the device to which the information is directed. Nevertheless, the information transmitted to a device located in another LAN is encapsulated in an IP packet which will be transmitted to one router from another until reaching the LAN of the final device. In this succession of transmissions the IP packet is encapsulated each time in a frame with destination MAC address that of the following router, and when said router receives the frame it disencapsulates it again obtaining the IP packet, and so on and so forth until the last router encapsulates the IP packet in a frame with destination MAC address that of the final device and it transmits it.

The interconnection process of LAN networks by IP protocol requires a method which permits obtaining the MAC address of a device of the LAN based on its IP address. The ARP protocol is in charge of this task. When a device has to transmit an IP packet to another device of the same LAN of which it knows the IP address, it obtains the destination MAC address by consulting the ARP protocol. The ARP protocol basically consists of the use of a set of request/reply messages and a correspondence database between IP addresses and MAC addresses. This database is built based on the request/reply messages received, so that if an IP packet is going to be transmitted to an address already in the database, it is not necessary to exchange messages to obtain the MAC address, since it is directly obtained from the database.

### Technical problem

In a local area network (LAN) based on IP technology, the equipments access the other networks through gateways or IP routers. These IP routers are in charge of communicating the local area network with the other networks, such as, for example, Internet or a corporate VPN. Frequently, all communications of LAN equipments with the outside depend on a single IP router, so that the possibility is considered of introducing a second IP router for a second access which provides a backup line and/or load balancing. For this, there are several solutions based on different protocols such as RIP, VRRP or GLBP, but all of them require configuration changes in the existing equipments.

The problem to resolve is how to insert a new back-up IP router without the need for reconfiguring any existing LAN equipment. This same problem is extended to the more generic case wherein there are one or several IP routers and one wants to insert a new back-up IP router. Furthermore, the aim is to perform this insertion so that if the new back-up IP router has power failure or a serious hardware problem the existing routers are directly connected to the LAN, disabling the back-up IP router.

The object of the invention is, therefore, to provide a local area network of back-up lines by the insertion of a new IP router in a totally transparent manner, i.e. without the need to alter the functioning or the configuration of the equipments already existing in said network.

### SUMMARY OF THE INVENTION

In order to resolve the aforementioned technical problem as well as others that will be mentioned below when we speak of the advantages thereof, the present invention provides, in a first aspect, a device designed to be transparently inserted in a local area network which consists of at least one IP router and at least one local equipment, said device comprising:
- means of connection between said device and each one of said local equipments;
- means of connection between said device and each one of said IP routers; and
- means of switching capable of establishing a connection between said local equipments and said IP routers in two different modes, namely, a first bridged mode wherein said local equipments and said IP routers are directly connected, and a second processed mode wherein said device acts as back-up router, spoofing said IP routers.

The device of the present invention comprises advantageously means of connection between said device and the external network. Said means of connection may consist of local area interfaces or network connectors.

Advantageously, the means of switching of the device of the present invention consists of electro-mechanical devices, which may also consist of relays.

Advantageously, said device may consist of an IP router.

The device of the present invention may also comprise means to establish a bridge between said local equipments and said IP routers, so that, when said means of switching are in processed mode, all the traffic addressed to said spoofed IP routers is delivered to said device.

The means to establish a bridge may advantageously include means to configure in said device the IP address of said spoofed IP routers and means capable of establishing a discovery protocol of said spoofed IP routers.

The means capable of establishing a discovery protocol may also advantageously include means capable of periodically sending ARP requests through said means of connection, means capable of receiving the replies, means capable of identifying, from them, both the means of connection and the MAC address corresponding to the spoofed IP router, means capable of creating and updating a spoofing database which stores the data of the interface connected to the spoofed IP router and of the MAC address thereof and means capable of transmitting free ARP packets to notify each change in the database to the local equipments.

Furthermore, the means to establish a bridge may include means capable of modifying the bridge algorithm so that said device processes the ARP traffic associated to the IP routers spoofed, means capable of modifying the bridge algorithm so that said device processes the traffic intended to be routed through the IP routers spoofed and means to modify the MAC source address determination algorithm in the routed packets.

The present invention incorporates, in a second aspect, a local area network which comprises at least one IP router, at least one local equipment and a device according to any of the aforementioned variants, inserted between said IP routers and said local equipments.

In a third aspect, the present invention develops a transparent insertion method of a device in a local area network which consists of at least one IP router and at least one local equipment, said method comprising the following steps:
- establishing a connection between said device and each one of said local equipments;
- establishing a connection between said device and each one of said IP routers;
- in the case of power loss or voluntary disablement of said device, switching said connections in bridged mode so that said local equipment and said IP routers are directly connected; and
- in the case of normal functioning of said device, switching said connections in processed mode so that said device acts as back-up router, spoofing said IP routers.

Advantageously, the method of the present invention includes the step of establishing a connection between said device and the external network, said connections being able to be established by local area interfaces or network connectors.

The switching steps can be performed through electro-mechanical devices and, also optionally, through relays.

The device to insert may be an IP router.

The method according to the present invention optionally includes the step of establishing a bridge between said local equipments and said IP routers, so that, when said means of switching are in processed mode, all the traffic addressed to said spoofed IP routers is delivered to said device.

Said step of establishing a bridge may include the step of configuring in said device the IP address of said spoofed IP routers and/or the step of establishing a discovery protocol of said spoofed IP routers (2).

Said step of establishing a discovery protocol advantageously includes the steps of periodically sending ARP requests through said means of connection, receiving the replies, identifying, from them, both the means of connection and the MAC address corresponding to the spoofed IP router, creating and updating a spoofing database which stores the data of the interface connected to the spoofed IP router and of the MAC address thereof and, finally, transmitting free ARP packets to notify each change in the database to the local equipments.

Also advantageously, the method according to the present invention may include, within the step of establishing a bridge, the steps of modifying the bridge algorithm so that said device processes the ARP traffic associated to the spoofed IP routers and/or of modifying the bridge algorithm so that said device processes the traffic intended to be routed through the spoofed IP routers. It can also includes the step of modifying the MAC source address determination algorithm in the routed packets.

Finally, the present invention also includes both a computer program which includes encoded media designed to carry out the steps of the aforementioned methods and a computer-readable media wherein encoded media designed to carry out the steps of said methods is stored.

In general terms, we can say that the present device provides, among others, a device and a process for the spoofing of one or more IP routers of a local area network (LAN) with the aim of transparently inserting a new back-up IP router in said network. Transparency is a characteristic which consists of the new back-up IP router being functional without the need to modify the configuration of any other equipment in the local area network (LAN). Furthermore, a new mechanical system will be provided to the new IP router to give back-up in the case of power loss or serious failure. This spoofing process is implemented in the new back-up IP router.

The invention, therefore, meets, among others, the following objectives and/or has the following advantages:
- Designing an electro-mechanical device for the spoofed equipments directly to the LAN in the case of power loss or serious failure, or even by configuration.
- Establishing a bridge between each equipment to spoof and the LAN. This achieves that all the traffic addressed to the spoofed equipments is delivered to the new IP router.
- Implementing a discovery protocol of the spoofed equipments. This protocol detects the spoofed equipments by ARP requests, so that the IP router manages to determine both the interface wherein each spoofed equipment is located and its MAC address.
- Modifying the bridge algorithm so that the ARP traffic associated to the spoofed equipments is processed. This ensures accessibility even in the absence of the spoofed equipment.
- Modifying the bridge algorithm so that all the traffic intended to be routed through any of the spoofed equipments is intercepted. Said traffic will thus not be bridged towards the spoofed equipment, but it will be routed by the new back-up IP router.
- Implementing tolerance to antispoofing devices and similar by the suitable choice of the MAC source address of the routed traffic. This point can be omitted in those local area networks where security mechanisms of this style are not implemented.

The main advantage of the invention is the flexibility provided by being able to include a new output router without having to alter the existing equipments. This even permits that the equipments are managed by different administrators, so that although we do not have access to the management/configuration of the existing router or of any LAN equipments, we can also add a new output router with new links to the external network.

Another important advantage is that the insertion is performed so that even in the case of power loss the equipment is capable of providing back-up to the existing routers.

The use of spoofing techniques within the present invention manages to include a new IP router without the need for modifying the configuration of the existing equipments, and particularly the use of transparent bridging and spoofing at ARP level to achieve said task.

The inclusion of an electro-mechanical system, furthermore ensures maintenance of connectivity even with power failures.

### BRIEF DESCRIPTION OF THE FIGURE

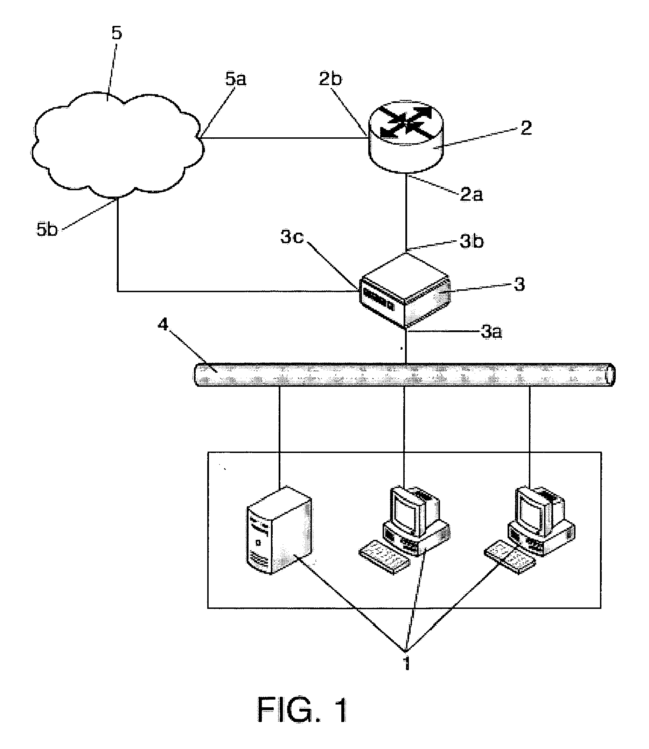

Figure 1 shows an example of embodiment of the present invention for the particular case of the insertion of a back-up router between three local equipments which integrate a LAN together with a single IP router.

### DESCRIPTION OF A PREFERRED EMBODIMENT

First, to reproduce the invention in a simple example, a particular case is studied wherein it only gives back-up to an output router, and then the same concept is extended to the generic case wherein there are one or more output routers, with a detailed description of the algorithms used.

Figure 1 shows a network {4} wherein there is a series of connected equipments {1} and an output router {2}. In turn, this output router has a connection to the rest of the networks {5}. Thus, the equipments {1} access the other equipments of other networks through the output router {2}. In this scenario we are going to introduce a new back-up output router {3} to have two accesses to the rest of the networks {5}, as shown in figure 2. The object of this invention is to perform this insertion without the need to modify the configuration of the currently connected equipments {1} or the output router {2}. To do this, we make use of different techniques which permit total control between the connected equipments {1} and the output router {2}.

The techniques used are based on the bridge functionality in the back-up router {3}, which has two local area network interfaces, {3a} and {3b}. When the router {3} with the functionality of transparent bridge is inserted between interfaces {3a} and {3b}, connectivity is maintained between the equipments {1} and the output router {2} transparently.

To prevent cases of power loss or even to permit the voluntary disablement of the back-up router {3} the two network interfaces of said back-up router {3} are designed so that one of two functioning modes is selected by relays. In bridged functioning mode the relays are not fed, and in this situation they interconnect the two network connectors. In the processed functioning mode, the relays are fed, and in this situation they connect each network connector with a network interface of the back-up router {3}. In situation of normal functioning of the back-up router {3} the relays will be in processed functioning mode, i.e. fed.

Once the new back-up router {3} is inserted, the IP address of the output router {2} should be configured. In this way, it will have all necessary information to start the spoofing process. This spoofing process is what permits the back-up router {3} to appropriate the outgoing traffic (of the equipments {1} to the network {5}) and routing it by the most convenient route, i.e. by the interface {3b} through the output router {2} or through the interface {3c} directly to the network {5}.

The spoofing process is performed at level 2, which means that given the IP address of the equipment to spoof (the output router {2}) the level 2 address of said equipment (MAC address) should be performed. This discovery process is performed by the back-up router {3} by periodically sending the ARP requests broadcast by bridge interfaces {3a} and {3b}. When the back-up router {3} receives a reply to these requests it identifies both the interface {3b} where the spoofed equipment {2} is found and the level 2 address of said equipment. Once this information has been obtained, the discovery process is repeated in precaution of both changes in the output router {2} (modification of the level 2 address associated to the IP address of said output router {2}) and changes in the location thereof (connection to another interface of the back-up router {3}).

In order for the spoofing to have effect, the bridge algorithm implemented in the back-up router {3} is modified. These modifications have the object of preventing crashing of the output router {2} and intercepting the traffic that the equipments {1} of the LAN {4} send to the outgoing equipment {2} to access the external network {5}.

The modification of the bridge algorithm to prevent crashes of the output router {2} consists of replying to the ARP requests addressed to the IP address of the output router {2}. In this way, although the output router {2} stops functioning the equipments {1} of the LAN {4} will continue transmitting the IP traffic addressed to the external network {5}.

The modification of the bridge algorithm to intercept the traffic that the equipments {1} of the LAN {4} send to the outgoing equipment {2} to access the external network {5} consists of identifying the traffic which reaches the bridge from the LAN {4} addressed to an IP address of the external network {5} and with level 2 address that of the output router {2}. All traffic identified in this way will be processed as local traffic instead of bridging it towards the output router {2}. In this way, the back-up router {3} will process all the traffic addressed to the external network {5} by the configured routing protocols.

To avoid problems due to the existence of antispoofing mechanisms and similar, the MAC source address determination algorithm can be modified in the routed packets. This modification is performed both for the packets from the local equipments {1} addressed to the external network {5} and the packets from the external network {5} addressed to the local equipments {1}.

In the case of the packets from the local equipments {1}, addressed to the external network {5}, and which are transmitted towards the output router {2} the MAC source address with which they are received will be used, i.e. the MAC address of the local equipment {1} in question.

In the case of the packets from the external network {5} addressed to the local equipments {1} that of the output router {2} will be used as MAC source address, unless the network administrator decides to configure the IP address of the back-up router {3} in local equipments {1}, in which case the suitable rules will be configured in the back-up router {3} to determine in what packets the MAC address of the output router {2} will be used and in which the MAC address of the back-up router {3} will be used.

To prevent other possible problems arising from the spoofing, spoofing at ARP level can be modified, so that when the ARP requests addressed to the IP address of the output router {2} are intercepted and replied to, a free ARP packet is also sent to the output router {2} notifying the IP/MAC address of the local requesting equipment {1}.

In this point, the objective of the invention is met, which was to include a new back-up router {3} in transparent manner.

In a more generic case, the back-up router {3} spoofs one or more output routers {2}. The same algorithms are followed for each spoofed output router {2}, as has already been introduced in the case described. These algorithms are detailed below.

The bridge functionality between all interfaces to which the equipments belonging to the LAN {4} are connected is enabled. This bridge is modified by adding the following rules for the frames received.

Rule 1: if the input interface is not the interface of the spoofed router, and the destination MAC address is that of the spoofed router, and it is an ARP protocol packet and REQUEST type (see RFC 1051), the frame is then intercepted to be locally processed. With this rule the ARP requests addressed to the spoofed router are intercepted, to prevent crashes thereof. The ARP REQUEST frames with destination to the broadcast MAC address do not need to be intercepted, since the back-up router will receive them naturally.

Rule 2: if the input interface is not the interface of the spoofed router, and the destination MAC address is that of the spoofed router, and it is an IP packet protocol, and the destination IP address is not that of the spoofed router, the frame is then intercepted to be locally processed. With this rule the IP packets originally addressed to be routed through the spoofed router are intercepted. The IP packets addressed to the IP router are not intercepted, since it is traffic intended for the management of said router.

A discovery protocol based on ARP consultations is implemented. This protocol serves to obtain, based on the IP address of the spoofed router, the interface where it is connected and the MAC address of the spoofed router in said interface. Initially, these two details are unknown, for which reason the values NONE will be worked with for the interface, and the MAC address of the back-up router in its bridge in representation of the MAC address of the spoofed router. These initial values will permit functioning even in the case that the spoofed router is never installed.

The ARP protocol is modified so that on receiving an ARP packet resolving the address of the spoofed equipment, the spoofing database is updated with the values of the interface whereby the ARP packet has been received (i.e. the interface where the spoofed router is connected), and the MAC address of the spoofed equipment. To cause the reception of this information, periodically (for example every 60 seconds, although this parameter can be adjusted in accordance with the needs of each installation) a broadcast ARP REQUEST consultation packet is transmitted to resolve the address of the spoofed router. If no ARP information on the spoofed router is received during a certain time (for example, after three consultations or 180 seconds, although this parameter can be adjusted in accordance with the needs of each installation, bearing in mind that it is not a determining parameter from the standpoint that it only serves for the initialization and to react to changes in the network topology) it is considered that the spoofed router has been disconnected from the network and, therefore, it is assigned the value NONE for the interface associated to said spoofed router.

In this case, the value of the MAC address for the spoofed router is conserved, since in this way less changes are provoked and, therefore, less overload in the LAN and in the local equipments.

Provided that the value of the MAC address for the spoofed router is modified in the back-up router, a series of 3 free broadcast ARP packets (i.e. REPLY type ARP packets addressed to the broadcast MAC address and information of the IP/MAC addresses of the spoofed router) to notify said change to the local equipments.

The ARP protocol is modified so that, when a REQUEST type ARP packet is received requesting the resolution of the address of the spoofed router, said request is answered with the information requested (there obtained via the discovery protocol or through the initial values).

At a routing level, the back-up router processes the intercepted packets in the same way as if they had been addressed to its MAC address, so that it is configured as if it were the default router or gateway of the local equipments {1}. No change has been made in the transmission process, which means that no special IP configuration is required either. Thus, the typical redundant access processes can be used via static routes, dynamic routing protocols (RIP, OSPF, BGP, etc.), backup, load balancing, etc.

In the IP networks in which security systems have been implemented against attacks of antispoofing type and similar, it can be necessary to implement additional changes in the spoofing process, as detailed below.

The bridge is modified implementing the following special rules instead of the previous ones:
Rule 1: if the input interface is not the interface of the spoofed router, and the destination MAC address is that of the spoofed router or that of broadcast, and is an ARP protocol packet and of REQUEST type (see RFC 1051), and it is a request for resolution for the IP address of the spoofed router, the frame is then intercepted to be locally processed. With this rule the ARP requests addressed to the spoofed router are intercepted, to prevent crashes thereof.
Rule 2: if the input interface is not the interface of the spoofed router, and the destination MAC address is that of the spoofed router, and it is an IP protocol packet, and the destination IP address is not that of the spoofed router, the frame is then intercepted to be locally processed. With this rule the IP packets originally intended to be routed through the spoofed router are intercepted. The IP packets addressed to the IP router are not intercepted, since it is traffic intended for the management of said router.
Rule 3: when an IP packet that was intercepted by Rule 2 is transmitted through the bridge, that of the original frame intercepted will be used as MAC source address, instead of using the MAC address of the back-up router in the bridge.
Rule 4: when an IP packet from an interface which does not belong to the bridge is transmitted through the bridge that of the spoofed router will be used as MAC source address. If there is more than one spoofed router or if the local equipments also access other networks explicitly through the back-up router (without the need for spoofing or interception), the rules that the administrator has configured to determine the MAC address to use will be applied, so that the local recipient equipment receives the MAC address packet of the router that it would use for that type of traffic in question. It should be borne in mind that these rules may be as simple as consulting the source IP address, or as complicated as detecting and monitoring high level sessions.

The ARP protocol is modified so that, on receiving a REQUEST type ARP packet requesting the resolution of the address of the spoofed router, said request is replied to with the requested information (whether obtained using the discovery protocol or using the initial values) and furthermore, a free unicast or broadcast ARP packet (according to the requester ARP REQUEST type) is sent to notify the address of the requester to the spoofed router (or to the other routers of the other interfaces of the bridge).

The present invention is not limited to the examples cited in the present description, only serving as an example of particular embodiment of its principles. The scope of the protection of the present invention is only defined by the sense of the claims detailed below.

## Claims

1. Device (3) designed to be transparently inserted in a local area network (4) which consists of at least one IP router (2) and at least one local equipment (1), said device comprising:
a)means of connection (3a) between said device (3) and each one of said local equipments(1); and
b)means of connection (3b) between said device (3) and each one of said IP routers (2);
**characterized in that** said device further comprises:
c)means of switching capable of establishing a connection between said local equipments (1) and said IP routers (2) in two different modes, namely:
- a first bridged mode wherein said local equipments (1) and said IP routers (2) are directly connected, and
- a second processed mode wherein said device (3) acts as back-up router, spoofing said IP routers (2).

2. Device (3) according to claim 1, **characterized in that** it comprises means of connection (3c) between said device (3) and the external network (5).

3. Device (3) according to claims 1 or 2, **characterized in that** said means of connection (3a, 3b, 3c) consists of local area interfaces or network connectors.

4. Device (3) according to any of claims 1 to 3, **characterized in that** said means of switching consists of electro-mechanical devices.

5. Device (3) according to claim 4, **characterized in that** said electro-mechanical devices are relays.

6. Device (3) according to any of claims 1 to 5, **characterized in that** said device (3) is an IP router.

7. Device (3) according to any of claims 1 to 6, **characterized in that** it comprises means to establish a bridge between said local equipments (1) and said IP routers (2), so that, when said means of switching are in processed mode, all the traffic addressed to said spoofed IP routers (2) is delivered to said device (3).

8. Device (3) according to claim 7, **characterized in that** said means to establish a bridge include means to configure in said device (3) the IP address of said spoofed IP routers (2).

9. Device (3) according to claims 7 or 8, **characterized in that** said means to establish a bridge include means capable of establishing a discovery protocol of said spoofed IP routers (2).

10. Device (3) according to claim 9, **characterized in that** said means capable of establishing a discovery protocol include means capable of periodically sending ARP requests through said means of connection (3a, 3b), means capable of receiving the replies and, from them, means capable of identifying both the means of connection and the MAC address corresponding to the IP router (2) spoofed.

11. Device (3) according to claim 10, **characterized in that** said means capable of establishing a discovery protocol further include means capable of creating and updating a spoofing database which stores the data of the interface connected to the spoofed IP router (2) and the MAC address thereof and means capable of transmitting free ARP packets to notify each change in the database to the local equipments (1).

12. Device (3) according to any of claims 7 to 11, **characterized in that** said means to establish a bridge include means capable of modifying the bridge algorithm so that said device (3) processes the ARP traffic associated to the spoofed IP routers (2).

13. Device (3) according to any of claims 7 to 12, **characterized in that** said means to establish a bridge include means capable of modifying the bridge algorithm so that said device (3) processes the traffic intended to be routed through the spoofed IP routers (2).

14. Device (3) according to any of claims 7 to 13, **characterized in that** said means to establish a bridge include means to modify the MAC source address determination algorithm in the routed packets.

15. Local area network which comprises:
a)at least one IP router (2);
b)at least one local equipment (1); and
c)a device (3) according to one of claims 1 to 14, inserted between said IP routers (2) and said local equipments (1).

16. Transparent insertion method of a device (3) in a local area network (4) which consists of at least one IP router (2) and at least one local equipment (1), said method comprising the following steps:
a) establishing a connection (3a) between said device (3) and each one of said local equipments (1); and
b)establishing a connection (3b) between said device (3) and each one of said IP routers (2);
**characterized in that** said method further comprises the following steps:
c)in the case of power loss or voluntary disablement of said device (3), switching said connections (3a, 3b) in bridged mode so that said local equipments (1) and said IP routers (2) are directly connected; and
d)in the case of normal functioning of said device (3), switching said connections (3a, 3b) in processed mode so that said device (3) acts as back-up router, spoofing said IP routers (2).

17. Method according to claim 16, **characterized in that** it includes the step of establishing a connection (3c) between said device (3) and the external network (5).

18. Method according to claims 16 or 17, **characterized in that** said connections (3a, 3b, 3c) are established by local area interfaces or network connectors.

19. Method according to any of claims 16 to 18, **characterized in that** said switching steps are performed through electro-mechanical devices

20. Method according to any of claims 16 to 19, **characterized in that** said electro-mechanical devices are relays.

21. Method according to any of claims 16 to 20, **characterized in that** said device (3) is an IP router.

22. Method according to any of claims 16 to 21, **characterized in that** it includes the step of establishing a bridge between said local equipments (1) and said IP routers (2), so that, when said means of switching are in processed mode, all the traffic addressed to said spoofed IP routers (2) is delivered to said device (3).

23. Method according to claim 22, **characterized in that** said step of establishing a bridge includes the step of configuring in said device (3) the IP address of said spoofed IP routers (2).

24. Method according to claim 22 or 23, **characterized in that** said step of establishing a bridge includes the step of establishing a discovery protocol of said spoofed IP routers (2).

25. Method according to claim 24, **characterized in that** said step of establishing a discovery protocol includes the following steps:
a)periodically sending ARP requests through said means of connection (3a, 3b);
b)receiving the replies; and
c)from them, identifying both the means of connection and the MAC address corresponding to the spoofed IP router (2).

26. Method according to claim 25 **characterized in that** said step of establishing a discovery protocol further includes the following steps:
a)creating and updating a spoofing database which stores the data of the interface connected to the spoofed IP router (2) and the MAC address thereof; and
b)transmitting free ARP packets to notify each change in the database to the local equipments (1).

27. Method according to any of claims 22 to 26, **characterized in that** said step of establishing a bridge includes the step of modifying the bridge algorithm so that said device (3) processes the ARP traffic associated to the spoofed IP routers (2).

28. Method according to any of claims 22 to 27, **characterized in that** said step of establishing a bridge includes the step of modifying the bridge algorithm so that said device (3) processes the traffic intended to be routed through the spoofed IP routers (2).

29. Method according to any of claims 22 to 28, **characterized in that** said step of establishing a bridge includes the step of modifying the MAC source address determination algorithm in the routed packets.

30. Computer program which includes encoded media designed to carry out the steps of the method according to any of claims 16 to 29.

31. Computer-readable media wherein encoded media designed to carry out the steps of the method according to any of claims 16 to 29 are stored.
